# EUROPEAN PATENT APPLICATION

(11) **EP 4 671 963 A1**
(43) Date of publication of application: **31.12.2025**
(21) Application number: 25182523.8
(22) Date of filing: 12.06.2025
(51) Int. Cl.: G06F 3/16

(54) **METHOD AND APPARATUS FOR TRANSFER OF SAFETY AUDIO TO AND FROM AN AUDIO PROCESSOR**

(30) Priority: 25.06.2024 IN 202441048519
(71) Applicant: NXP B.V., 5656 AG Eindhoven (NL)
(72) Inventor: KAMALAPURKAR, Shreedhar Madan Rao, 5656AG Eindhoven (NL); DUMITRU, Nicolae, 5656AG Eindhoven (NL)
(74) Representative: Hardingham, Christopher Mark

(57) **Abstract**

Transferring audio samples in an audio system comprises receiving respective streams of audio samples at a same time from a safety audio source and non-safety audio sources, where a sampling frequency of the audio samples of the safety audio source is the same as the sampling frequency of the audio samples of the non-safety audio sources. A determination is made whether the audio samples which are received is from a safety audio source or non-safety audio sources. A first memory operation to transfer the audio samples from the safety audio source to an audio processor in a first memory channel and a second memory operation to transfer the audio samples from the non-safety audio sources to the audio processor in a second memory channel are performed based on the determination.

## Description

### FIELD OF USE

The present disclosure relates generally to audio streaming, and more particularly, to a method and apparatus for transfer of safety audio with low latency to and from an audio processor.

### BACKGROUND

In an audio system, an audio source such as an music application or microphone generates audio samples in the form of a serial data stream. The audio source outputs or streams the audio samples as a serial data stream in accordance with a serial stream format, such as an IIS (Inter-IC sound) serial stream, a time division multiplexing (TDM) serial stream, or a serial peripheral interface (SPI) serial stream among other formats. An audio processor processes blocks of audio samples from a plurality of audio sources. A block is a group of audio samples from an audio source. To facilitate efficient transfer, blocks of audio samples from different audio sources are transferred to or from the audio processor in a memory or first-in-first out (FIFO) buffer based transfer operation. Transfer of the blocks from each audio source is performed sequentially in time and transfer of blocks from one audio source depends on successful transfer of the blocks of another audio source. A hang situation might occur due to an audio source clock being stuck, an output of the audio source stopping, or audio content which is sampled not being available, as examples, resulting in the transfer being delayed or stopped. In a vehicle, a safety audio source generates safety audio such as a warning or diagnostic audio when there is a condition that could affect safety of occupants of the vehicle. The hang situation could cause safety audio playback to be stopped, not played at all, or delayed, hence impacting occupants' safety.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is an example block diagram of an audio system in accordance with an embodiment.
FIG. 2 is an example block diagram of an audio transfer control circuit of the audio system in accordance with an embodiment.
FIG. 3 is a flow chart of functions associated with transfer of blocks of audio samples from a safety audio source or non-safety audio source in accordance with an embodiment.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

Embodiments disclosed herein are directed to an audio transfer circuit arranged to transfer in a memory operation over a memory channel only blocks of audio samples from a safety audio source to an audio processor or from the audio processor to an audio output to ensure deterministic low latency transfer independent of transfer of other blocks of audio samples from other audio sources that are to be transferred at a same time. A host processor stores an indication in a stream descriptor register which indicates whether a serial data stream has blocks of audio samples related to safety audio from a safety audio source or non-safety audio from a non-safety audio source. If a serial data stream has blocks of audio samples related to safety audio from a safety audio source, the audio transfer circuit sequentially transfers only the blocks of audio samples from the safety audio source to and from the audio processor without any blocks of audio samples from a non-safety audio source or another safety audio source in a respective memory operation over a respective memory channel. If a serial data stream has blocks of audio samples related to non-safety audio, the blocks of audio samples are sequentially transferred in a memory operation over a memory channel different from the memory operation and memory channel used to sequentially transfer the safety audio so that a hang of transfer of audio blocks of samples from a non-safety audio source does not hang the transfer of blocks of audio samples from the safety audio source. Integrity in transferring the blocks of audio samples from the safety audio source is maintained with this decoupling and with a deterministic low latency. Well known instructions, protocols, structures, and techniques have not been shown in detail in order not to obfuscate the description.

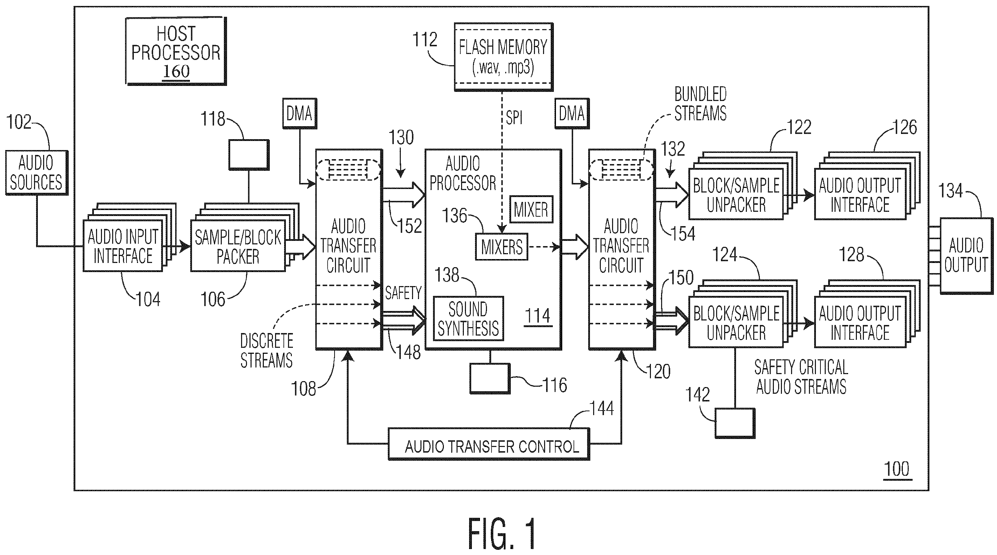

FIG. 1 is an example block diagram of an audio system 100 in accordance with an embodiment. The audio system 100 is arranged to receive a plurality of serial data streams of audio samples from a plurality of audio sources 102 and output a plurality of serial data streams of audio samples from the plurality of audio sources to one or more audio output 134. The serial data streams may each be formatted in accordance with a serial stream format such as an IIS (Inter-IC sound) serial stream, a time division multiplexing (TDM) serial stream, or a serial peripheral interface (SPI) serial stream among other formats. The serial data streams are transferred over a physical connection between an audio source 102 and the audio system 100 and referred to as physical streams. In an example, an audio source 102 may be an application (i.e., app) such as an Android application which outputs audio samples and the audio output 134 may be a speaker or amplifier. As examples, the application may be a music app, calendar app, messaging app, navigation app, or radio app which generates respective audio samples. The audio source 102 is also classified as a safety audio source such as safety audio in a vehicle or a non-safety audio source. An example of this safety audio from a safety audio source may be a seat belt chime, a warning, or diagnostic audio provided to occupants to indicate a possible safety concern in the vehicle while a non-safety audio from a non-safety audio source may be from the Android application, for example, and unrelated to vehicle safety. The audio system 100, audio sources 102, and one or more audio output 104 may be implemented as one or more of analog circuitry, mix signal circuitry, memory circuitry, logic circuitry, and processing circuitry that executes code stored in a memory to perform disclosed functions.

The example audio system 100 has an audio input interface 104, a sample/block packer 106, audio transfer circuit 108, an audio processor 114, another audio transfer circuit 120, block/sample unpackers 122, 124, and audio output interfaces 126, 128. The audio input interface 104 receives a plurality of serial data streams at a same time which carry audio samples from respective audio sources 102. The audio samples are digital samples of audio from a safety audio source or non-safety audio source in an example sampled at a respective sampling frequency. The audio input interface 104 outputs a stream of audio samples for each audio source 102. The audio samples may be stored in a memory buffer of the audio input interface 104 and transferred to a memory buffer 118 of the sample/block packer 106. The transfer of audio samples of an audio source 102 between respective memory buffers within the audio system 100 defines a stream which is a logical stream in contrast to the serial data stream which is a physical stream transferred between the audio system 100 and an external device such as the audio source 102 or audio output 134. Audio samples from different audio sources 102 are transferred as different streams. The sample/block packer 106 may output the audio samples as blocks of audio samples. A block defines a fixed number of audio samples of a respective audio source 102. The audio transfer circuit 108 transfers blocks of audio samples from the audio sources 102 as one or more memory operations performed by a respective memory channel 130. The memory channel 130 is a physical channel between the audio transfer circuit 108 and a memory buffer 116 of the audio processor 114 over which the blocks are transferred. In an example, the audio processor 114 performs various operations on the received audio samples in the blocks such as mixing by a mixer 136 the audio samples of one audio source 102 with audio samples of another audio source 102 or adjusting an amplitude or phase of the audio samples as a volume or balance operation. Similarly, after the processing by the audio processor 114, an audio transfer circuit 120 performs one or more memory operations to transfer blocks of audio samples of a respective audio source 102 which are stored a memory buffer 116 of the audio processor 114 to the block/sample unpacker 122, 124 over a respective memory channel 132. The block/sample unpacker 122, 124 may unpack audio samples from the blocks and output a respective stream of audio samples for each audio source 102 to the audio output interface 126, 128 which outputs one or more serial data streams which carry the audio samples of the audio sources 102 to an audio output 134 such as an amplifier or speaker for playback.

The audio system 100 also has a host processor 160. The host processor 160 may cause memory-based audio samples such as in a .wav or .mp3 file that are stored in a memory such as the flash memory 112 to be provided to the audio processor 114. The audio samples may be provided in a serial data stream and indicate certain safety notifications as an example in a vehicle. The host processor 136 may also cause the audio processor 114 to mix the audio samples of blocks of the safety audio source 102 with other samples of blocks of other audio sources 102 or adjust a volume of the audio samples. The host processor 136 may further perform sound synthesis 138 in the audio processor 114 which generates audio samples which could be related to safety audio.

In an example, the audio transfer circuit 108, 120 has a respective direct memory access (DMA) engine to perform a memory operation in the form of a DMA operation to transfer blocks of audio samples of one or more non-safety audio sources 102 from the sample/block packer 106 to the audio processor 114 in a memory channel and blocks of audio samples from the audio processor 114 to the sample/block unpacker 122 in a memory channel. The host processor 160 may perform the DMA operation by generating a linked list of elements. In one example, each element of the linked list may be stored in a discrete memory location in memory of the audio processor 114 that indicates a transfer of blocks of audio samples from the sample block packer 106 to the audio processor 114 associated with a respective non-safety audio source 102. In another example, each element of the linked list may indicate a memory transfer of blocks of audio samples from the audio processor 114 to the sample/block unpacker 122 associated with a respective non-safety audio source 102. The audio samples that are indicated to be transferred by the linked list may have a same sampling frequency. The DMA may use the linked list and corresponding elements of the linked list to execute the memory operation.

To illustrate, blocks of audio samples received by the sample/block packer 106 may be stored in the memory buffer 118. Each element in the linked list that is generated may include a pointer to a previous element or next element and a DMA operation is performed for each element of the linked list to transfer blocks of audio samples of a non-safety audio source 102 from the sample/block packer 106 to the audio processor 114 which are stored in the buffer 116. Further, the audio samples that are transferred and indicated by the linked list in the DMA operation have a same sampling frequency and are transferred in a same DMA channel of the DMA operation. The DMA channel is the memory channel 152 which is a physical channel between the audio transfer circuit 108 and the audio processor 114 or memory channel 154 between the audio processor 114 and the block/sample unpacker 122 over which blocks of audio samples are transferred during the DMA operation. In an example, the DMA engine executes the DMA operation indicated by the linked list and pushes blocks of audio samples from different non-safety audio sources with a same sampling frequency to the audio processor 114 in a first DMA channel. In an example, the DMA operation may be executed when an amount of audio samples of each of the audio sources with a same sampling frequency (Fs) in the buffer 118 exceeds a threshold level. Audio samples sampled at another sampling frequency from another non-safety audio source are transferred in another DMA operation indicated by another linked list to the audio processor 114 in a second DMA channel. In an example, the DMA operations may be performed in parallel. In another example, the DMA engine of the audio transfer circuit 120 transfers blocks of audio samples of audio sources 102 between the audio processor 114 and a block/sample unpacker 122. Blocks of audio samples may be stored in the memory 116 of the audio processor 114. The DMA engine executes the DMA operation to pull audio samples stored in the memory 116 of the audio processor 114 from different non-safety audio sources with a same sampling frequency and provide blocks to the block/sample unpacker 122 in a DMA channel 154 when an amount of audio samples of each audio source in a memory 116 and associated with audio sources with a same sampling frequency falls below a threshold amount. The block/sample unpacker 122 may unpack the audio samples in the blocks for output to the audio output interface 126 which in tum outputs one or more serial data streams of audio samples to the audio output 134.

Embodiments disclosed herein are directed to the audio transfer circuit 108, 120 controlled by an audio transfer control circuit 144 to transfer blocks of audio samples of a safety audio source in a separate memory operation and separate memory channel rather than in a same memory operation and same memory channel already carrying audio samples of other audio sources. In an example, the audio samples of the different types of audio sources may need to be transferred at a same time (e.g., in parallel) to avoid impairments (e.g., timing delays) in the playback of the audio. The audio transfer control circuit 144 identifies the blocks of safety audio samples and causes transfer of the blocks of audio samples in a memory operation such as a DMA operation which is separate from a memory operation to transfer blocks of audio samples of a non-safety audio source. By separate, the host processor 160 defines a memory operation with a single element which indicates the transfer of the blocks of audio samples of the safety audio source which the DMA engine uses to perform the memory operation in a memory channel rather than generating a linked list of elements associated with transfer of blocks of audio samples from a plurality of audio sources in the same memory channel. The element to transfer blocks of audio samples of a safety audio source will not have a pointer to a next transfer of blocks of audio samples or a previous transfer of blocks of audio samples. Further, audio samples from different safety audio sources 102 are transferred by a separate memory operation and separate memory channel. For example, blocks of audio samples from a plurality of non-safety audio sources are transferred in a memory channel of memory channels 152 of the plurality of memory channels 130 as a memory operation while only blocks of audio samples from a safety audio source are transferred in a separate memory operation and separate memory channel 148. The memory operations may be performed in parallel. As another example, blocks of audio samples from a plurality of non-safety audio sources are transferred in a memory channel of memory channels 154 of the plurality of memory channels 132 as a memory operation while blocks of audio samples from a safety audio source are transferred in a separate memory operation and separate memory channel 150. The memory operations may be performed in parallel. Further, a respective memory channel of memory operations carries audio samples with a same sampling frequency from one or more non-safety audio sources and even if the audio samples of safety audio sources has the same sampling frequency, the blocks of audio samples of the safety audio sources will be transferred over a separate memory channel 148, 150 from the memory channel 152, 154 in a separate memory operation. Each arrow 130, 132 in the illustration represents one or more discrete memory channels associated with a memory operation in an example, and each arrow 152, 154 indicates a memory channel associated with a memory operation carrying blocks of audio samples from different non-safety sources while each arrow 148, 150 indicates a respective memory channel associated with a memory operation carrying only blocks of audio samples from a single safety source. In the example, the non-safety audio for multiple audio sources are transferred in a memory channel of a memory operation while safety audio of an audio source is transferred in its own memory channel and its own memory operation.

In a vehicle, the safety audio source generates safety audio samples such as a waming or diagnostic audio when there is a condition that could affect safety of occupants in the vehicle. If the audio transfer circuit 108, 120 was to perform the memory operation to transfer audio samples with a same sampling frequency irrespective of whether the audio source 102 is a safety related audio source or non-safety related audio source and an audio source 102 is not able to provide blocks of audio samples, the DMA engine needs to wait until the blocks of audio samples is received and any subsequent blocks of audio samples from other audio sources to be transferred in the same DMA operation is delayed or blocked. Such a hang situation might occur during the transfer due to an audio source clock being stuck, an output of the audio source blocked, or audio content which is sampled not being available, as examples resulting in the transfer being delayed or blocked. For example, the DMA engine does not execute the DMA operation for an element in a linked list until a block to transfer is received. If there is no block of audio received, the DMA engine waits and as a result delays or stops transfer of blocks of audio samples from other audio sources. The delay or stopping results in a DMA engine preventing blocks of audio samples from a safety audio source from being transferred to the audio processor 114 or block/sample unpacker in a memory channel when the memory operation includes both transfer of audio samples from a non-safety source and safety source having a same sampling frequency. The disclosed audio transfer control circuit 144 prevents any hang (i.e., stopping or delay) of blocks of audio samples of a safety audio source in the transfer. Integrity in streaming the blocks of audio samples from the safety audio source is maintained with this decoupling of the transfer of blocks of audio samples from non-safety audio sources and generates a deterministic low latency in transfer of safety audio samples.

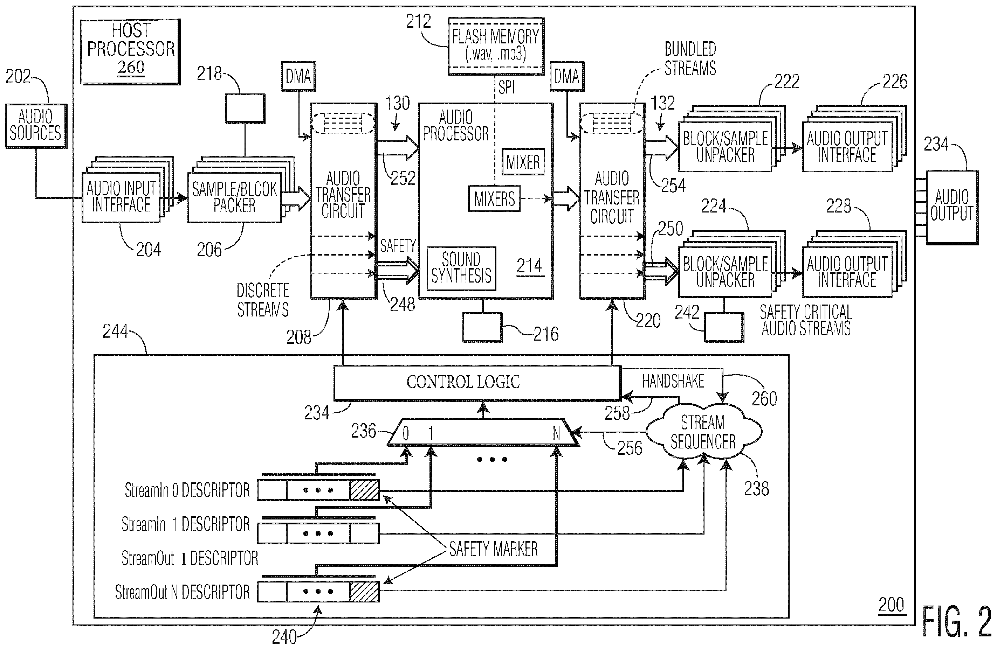

FIG. 2 is an example block diagram of the audio transfer control circuit 244 of the audio system 200 in accordance with an embodiment. The audio transfer control circuit 244 is arranged to perform transfer of blocks of audio samples from different safety audio sources to and from the audio processor 214 in a respective memory operation and memory channel independent of transfer of blocks of audio samples from non-safety audio sources. The audio transfer control circuit 244 includes a plurality of stream descriptor control registers 240, a multiplexer 236, control logic 234, and a stream sequencer 238. Each stream descriptor control register 240 includes stream attributes of a stream which is received by the sample/block packer 206 to be provided to the audio processor 214 (e.g., StreamIn Descriptor) or stream attributes of a stream which is provided from the audio processor 214 to block/sample unpacker 222, 224 (e.g., StreamOut descriptor) each including a plurality of fields such as a source address which is a memory address of memory where the audio samples from an audio source 102 are stored, a destination address which is a memory address of memory where the audio samples of the audio source 102 are to be stored, a safety marking to indicate whether the audio samples is from a safety audio source to distinguish it from audio samples from a non-safety audio source, and other information such as a latency, number of samples per block, sampling resolution (bits/sample) and audio sampling frequency etc. associated with audio samples. In an example, the host processor 260 populates the fields of each of the stream descriptor control registers 240 based on a configuration of the audio system 100 such as whether a physical stream which is received by the audio processor 214 and provided to the audio transfer circuit 208, 220 as a logical stream originates from a non-safety audio source or safety audio source. The indication of whether a stream carries audio samples from a safety audio source or non-audio source in the descriptor 240 is provided to the stream sequencer 238. Based on the contents of each of the stream descriptor control registers 240, the stream sequencer 238 further outputs a selection signal 256 to the multiplexer 236. The selection signal 256 causes the multiplexer 236 to provide stream attributes of a selected stream to the control logic 234. The stream that is selected may be based on a round robin selection of the plurality of streams or based on a priority of the stream whose audio samples are to be transferred in an example (e.g., blocks of safety audio samples). Further, the stream sequencer 238 provides a signal 258 to the control logic 234 to perform the transfer of the selected stream or streams. For example, the stream sequencer 238 may provide the signal 258 when an amount of audio samples stored in a memory of the samples/blocks packer 206 reaches a threshold (i.e., fill level) to push blocks to the audio processor 214 or an amount of audio samples stored in a memory of the block/sample unpacker 222, 224 reaches a threshold (i.e., depletion level) to pull blocks to the block/sample unpacker 222, 224 from the audio processor 214. The control logic 234 performs a memory operation to transfer blocks of audio samples of only one audio source which is a safety audio source in one memory channel 248, 250 of a memory operation based the stream attributes of the stream indicating the audio source 102 is a safety audio source while the control circuit 234 performs another memory operation to transfer blocks of audio samples of one or a plurality of non-safety audio source in another memory channel 252, 254 based the stream attributes of the stream indicating the audio source 102 is the plurality of non-safety audio sources. Further, the streaming control circuit 234 provides a signal 260 which indicates the transfer is completed, whereby the streaming sequencer 238 causes the control logic 234 to initiate another transfer of blocks of audio samples. Based on a stream having the safety marker indication in the stream descriptor control registers 240, the control circuit 234 is able to distinguish the streams and perform a memory operation to transfer only the blocks of audio samples of an audio source 102 having the safety audio samples in a memory channel. The memory operation will not transfer blocks of audio samples from the safety source along with blocks of audio samples from other safety or non-safety audio sources in the same memory channel even if the blocks of audio samples have a same sampling frequency. In an example, the transfer of the audio samples of the safety and non-safety audio source may be performed in parallel. Further, transfer of blocks of audio samples of a non-safety audio source which is in a hang state does not affect transfer of the blocks of audio samples of the safety audio. Instead, blocks of audio samples from other safety or non-safety audio sources are transferred in a respective memory channel of a different memory operation even if two or more memory channels end up transferring blocks of audio samples at a same sampling frequency. The safety audio transfer allows for low latency in the transfer of audio samples of the safety audio source because the completion of the memory operation is not dependent on transfer of audio samples from another audio source 102 before the transfer of audio samples of the safety audio source. The memory operation and respective memory channel becomes exclusive for safety audio in an example.

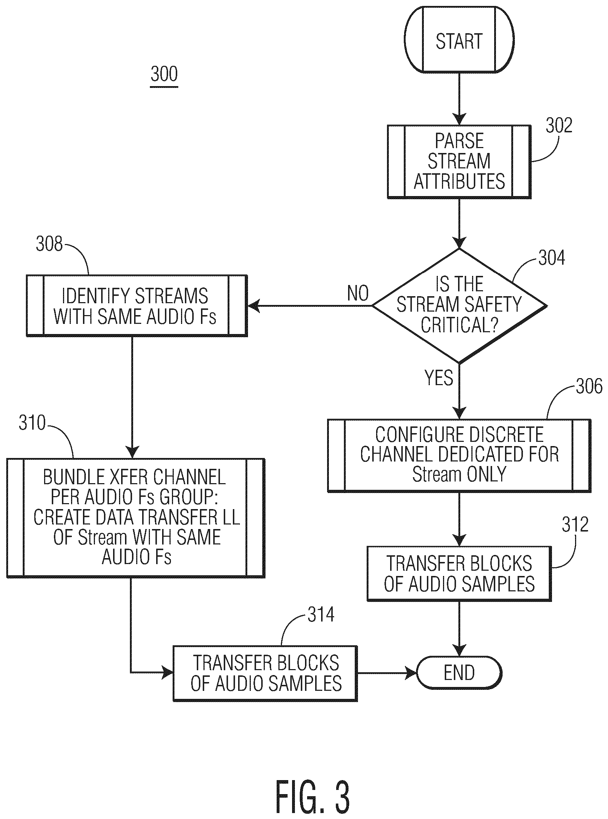

FIG. 3 is a flow chart 300 of functions associated with transfer of audio samples from a safety audio source or non-safety audio source in accordance with an embodiment. Functions are performed by the control logic 234 disclosed herein as an example.

At 302, the control logic parses stream attributes of one or more streams indicated by contents of fields of a respective stream descriptor control register provided by the multiplexer. The stream attributes may include one or more of a source address which is a memory address where the audio samples of an audio source is received, a destination address which is a memory address where the audio samples of the audio source is to be sent, and a safety marking to indicate whether blocks of audio samples is from a safety audio source to distinguish it from blocks of audio samples from a non-safety audio source. At 304, a determination is made whether stream attributes of a stream from an audio source includes a safety marking. The determination is based on presence or absence of a safety marker in the stream descriptor control register 240 for the stream. If a safety marking is included, then a memory operation is to transfer only blocks of the audio samples of the respective safety audio source over a memory channel in a memory operation. At 306, the control circuit schedules a memory operation to transfer only the blocks of audio samples of the safety audio source over the memory channel in the memory operation. The scheduling may include defining an element specifying the transfer from source to destination that the DMA uses to perform the transfer. At 312, the memory operation is executed to transfer the blocks of audio samples of the audio safety source over the memory channel between the source and destination indicated by the stream attributes. The memory operation transfers only the blocks of the audio samples from the safety audio source and the respective memory channel used by the memory operation does not include blocks of audio samples from other non-safety or other safety audio sources even if the sampling frequency of the audio samples from these audio sources is the same as the sampling frequency of the audio samples of the safety audio source. This prevents any audio sources which is in a hang state from delaying transfer of the blocks of the safety audio samples. If a safety marking is not included with a stream, then at 308, the control circuit identifies audio samples from non-safety audio sources with a same sampling frequency (Fs) from the stream attributes of one or more streams also not with a safety marking. At 310, the control circuit schedules a memory operation to transfer blocks of audio samples of the one or more non-safety audio sources over a memory channel in a memory operation. In an example, the scheduling includes allocating a linked list (LL) of elements each populated indicate transfer of blocks of audio samples of a respective non safety audio source from a source to destination, and the audio samples from the audio sources has a same sampling frequency. At 314, the memory operation is executed to transfer the blocks of audio samples of the audio sources as indicated by the linked list from each audio source which is a non-safety audio source over a memory channel. The memory channel transfers a bundle of streams of the blocks of audio samples from non-safety audio sources with audio samples having a same sampling frequency. Audio samples with different sampling frequencies are transferred over a respective memory channel in different memory operations. Further, blocks of audio samples from non-safety audio sources are transferred in a different memory operation and separate memory channel from the blocks of audio samples of the safety audio source even if the blocks have samples with a same sampling frequency and are transferred at a same time. In an example, memory operations to transfer blocks of audio samples of a safety audio source such as in step 310 could be executed in parallel with transfer blocks of audio samples of a non-safety audio source such as in step 312 but are separate memory operations and use separate memory channels to perform the transfer.

In an embodiment, a method for transferring blocks of audio samples in an audio system is disclosed. The method comprises: receiving respective streams of audio samples from a safety audio source and non-safety audio sources at a same time, wherein a sampling frequency of the audio samples of the safety audio source is the same as the sampling frequency of the audio samples of the non-safety audio sources; determining whether the audio samples which are received are from the safety audio source or non-safety audio sources; and performing a first memory operation to transfer blocks of the audio samples from the safety audio source to an audio processor in a first memory channel and a second memory operation to transfer blocks of the audio samples from the non-safety audio sources to the audio processor in a second memory channel based on the determination. In an example, the first and second memory operations are direct memory access (DMA) operations executed in parallel with each other, the first memory operation and the second memory operation are separate memory operations, and the first memory channel and the second memory channel are separate memory channels. In an example, the method further comprises constructing a linked list indicative of transfer of the blocks of the audio samples from only the non-safety audio sources; and wherein performing the second memory operation comprises performing the second memory operation based on the linked list. In an example, the method further comprising constructing an element indicative of transfer of the blocks of the audio samples from the safety audio source and no other audio sources; and wherein performing the first memory operation comprises performing the first memory operation based only on the element, the element having no pointers to other elements. In an example, determining that audio samples are received from the safety audio source is based on an attribute of a stream descriptor in a stream descriptor register. In an example, performing the memory operations further comprises performing the first memory operation when an amount of audio samples from the safety audio source stored meets a threshold level. In an example, performing the memory operations further comprises performing the second memory operation when an amount of audio samples from each of the non-safety audio source meets a threshold level. In an example, the method further comprises scheduling a third memory operation to transfer blocks of audio samples of the non-safety audio source from the audio processor to a sample/block unpacker in a third memory channel and a fourth memory operation to transfer blocks of audio samples of the safety audio source from the audio processor to a sample/block unpacker in a fourth memory channel. In an example, receiving respective streams of audio samples from a safety audio source and a non-safety audio source comprises receiving the streams via a serial data stream. In an example, the method further comprises outputting the audio samples of the non-safety audio source or safety audio source to a speaker or amplifier.

In another embodiment, an audio transfer control circuit is disclosed. The circuit comprises: a plurality of stream descriptor control registers arranged to indicate whether a respective stream of a plurality of streams received at a same time originates from an safety audio source or non-safety audio source; a control circuit; a stream sequencer arranged to provide to the control circuit the indications of whether the respective streams of the plurality of streams originates from the safety audio source or non-safety audio source and output a signal to perform transfers of blocks of audio samples from the safety audio source and the non-safety audio source; and a control circuit arranged to perform a first memory operation to transfer blocks of the audio samples from the safety audio source to an audio processor in a first memory channel based on the output of the signal and perform a second memory operation to transfer blocks of the audio samples from the non-safety audio sources to the audio processor in a second memory channel based on the output of the signal, wherein a sampling frequency of the audio samples of the safety audio source is the same as the sampling frequency of the audio samples of the non-safety audio sources. In an example, the first and second memory operations are direct memory access (DMA) operations executed in parallel with each other, the first memory operation and the second memory operation are separate memory operations, and the first memory channel and the second memory channel are separate memory channels. In an example, the control circuit is further arranged to construct a linked list indicative of transfer of audio samples from only the non-safety audio sources; and wherein performing the second memory operation comprises performing the second memory operation based on the linked list. In an example, the control circuit is further arranged to construct an element indicative of transfer of audio samples from the safety audio source and no other audio sources; and wherein performing the first memory operation comprises performing the first memory operation based on only the element, the element having no pointers to other elements in a linked list. In an example, the streaming sequencer signals the streaming control circuit to perform the first memory operation when an amount of the audio samples from the safety audio source meet a threshold level. In an example, the streaming sequencer signals the streaming control circuit to perform the second memory operation when an amount of the audio samples from each of the non-safety audio sources meets a threshold level. In an example, the streaming sequencer receives an indication from the control circuit when the first and second memory operation are complete which causes the streaming sequencer to indicate to the control circuit other audio samples to transfer. In an example, the control circuit is further arranged to schedule a third memory operation to transfer the audio samples of the non-safety audio source from the audio processor to a sample/block unpacker in a third memory channel and a fourth memory operation to transfer the audio samples of the safety audio source from the audio processor to a sample/block unpacker in a fourth memory channel. In an example, the streams of audio samples from the safety audio source and the non-safety audio source are received via a serial data stream. In an example, the stream descriptor register further provides an indication of a sampling frequency of the audio samples of respective audio sources.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. An audio transfer control circuit comprising:
a plurality of stream descriptor control registers arranged to indicate whether a respective stream of a plurality of streams received at a same time originates from an safety audio source or non-safety audio source;
a control circuit;
a stream sequencer arranged to provide to the control circuit the indications of whether the respective streams of the plurality of streams originates from the safety audio source or non-safety audio source and output a signal to perform transfers of blocks of audio samples from the safety audio source and the non-safety audio source; and
a control circuit arranged to perform a first memory operation to transfer blocks of the audio samples from the safety audio source to an audio processor in a first memory channel based on the output of the signal and perform a second memory operation to transfer blocks of the audio samples from the non-safety audio sources to the audio processor in a second memory channel based on the output of the signal, wherein a sampling frequency of the audio samples of the safety audio source is the same as the sampling frequency of the audio samples of the non-safety audio sources.

2. The audio transfer control circuit of claim 1, wherein the first and second memory operations are direct memory access (DMA) operations executed in parallel with each other, the first memory operation and the second memory operation are separate memory operations, and the first memory channel and the second memory channel are separate memory channels.

3. The audio transfer control circuit of claim 1 or 2, wherein the control circuit is further arranged to construct a linked list indicative of transfer of audio samples from only the non-safety audio sources; and wherein performing the second memory operation comprises performing the second memory operation based on the linked list.

4. The audio transfer control circuit of any preceding claim, wherein the control circuit is further arranged to construct an element indicative of transfer of audio samples from the safety audio source and no other audio sources; and wherein performing the first memory operation comprises performing the first memory operation based on only the element, the element having no pointers to other elements in a linked list.

5. The audio transfer control circuit of any preceding claim, wherein the streaming sequencer signals the streaming control circuit to perform the first memory operation when an amount of the audio samples from the safety audio source meet a threshold level.

6. The audio transfer control circuit of any preceding claim, wherein the streaming sequencer signals the streaming control circuit to perform the second memory operation when an amount of the audio samples from each of the non-safety audio sources meets a threshold level.

7. The audio transfer control circuit of any preceding claim, wherein the streaming sequencer receives an indication from the control circuit when the first and second memory operation are complete which causes the streaming sequencer to indicate to the control circuit other audio samples to transfer.

8. The audio transfer control circuit of any preceding claim, wherein the control circuit is further arranged to schedule a third memory operation to transfer the audio samples of the non-safety audio source from the audio processor to a sample/block unpacker in a third memory channel and a fourth memory operation to transfer the audio samples of the safety audio source from the audio processor to a sample/block unpacker in a fourth memory channel.

9. The audio transfer control circuit of any preceding claim, the streams of audio samples from the safety audio source and the non-safety audio source are received via a serial data stream.

10. The audio transfer control circuit of any preceding claim, wherein the stream descriptor register further provides an indication of a sampling frequency of the audio samples of respective audio sources.

11. A method for transferring blocks of audio samples in an audio system, the method comprising:
receiving respective streams of audio samples from a safety audio source and non-safety audio sources at a same time, wherein a sampling frequency of the audio samples of the safety audio source is the same as the sampling frequency of the audio samples of the non-safety audio sources;
determining whether the audio samples which are received are from the safety audio source or non-safety audio sources; and
performing a first memory operation to transfer blocks of the audio samples from the safety audio source to an audio processor in a first memory channel and a second memory operation to transfer blocks of the audio samples from the non-safety audio sources to the audio processor in a second memory channel based on the determination.

12. The method of claim 11, wherein the first and second memory operations are direct memory access (DMA) operations executed in parallel with each other, the first memory operation and the second memory operation are separate memory operations, and the first memory channel and the second memory channel are separate memory channels.

13. The method of claim 12, further comprising constructing a linked list indicative of transfer of the blocks of the audio samples from only the non-safety audio sources; and wherein performing the second memory operation comprises performing the second memory operation based on the linked list.

14. The method of claim 12 or 13, further comprising constructing an element indicative of transfer of the blocks of the audio samples from the safety audio source and no other audio sources; and wherein performing the first memory operation comprises performing the first memory operation based only on the element, the element having no pointers to other elements.

15. The method of any of claims 11 to 14, wherein determining that audio samples are received from the safety audio source is based on an attribute of a stream descriptor in a stream descriptor register.
